# EUROPEAN PATENT APPLICATION

(11) **EP 1 908 985 A1**
(43) Date of publication of application: **09.04.2008**
(21) Application number: 06291551.7
(22) Date of filing: 02.10.2006
(51) Int. Cl.: F16F 9/53

(54) **Twin-tube magnetorheological damper**

(71) Applicant: Delphi Technologies, Inc., Troy, Michigan 48007 (US)
(72) Inventor: Noakley, Robin, 60800Trumilly (FR)
(74) Representative: Coret, Sophie V.G.A.

(57) **Abstract**

According to the present invention there is provided a damping device (1) comprising a cylinder (2) containing a volume of magnetorheological fluid therein, said cylinder having a piston (4) slidably mounted therein, said piston dividing said cylinder into a compression chamber (6) and a rebound chamber (8), the piston being connected to a distal end of a piston rod (10), said piston rod extending out of the cylinder through the rebound chamber, an MR valve being provided in a flow path for controlling the flow of fluid from said rebound chamber to said compression chamber, at least one first one way valve (36) being provided in said piston for allowing the flow of fluid through said piston from said compression chamber to said rebound chamber while preventing the flow of fluid through said piston from said rebound chamber to said compression chamber, at least one second one way valve (26) being provided in said flow path for allowing the flow of fluid from said rebound chamber to said compression chamber through said MR valve while preventing the return flow of fluid from said compression chamber to said further chamber through said MR valve.

## Description

The present invention relates generally to a magnetorheological (MR) damper and in particular a twin-tube MR damper for controlling the movement of vehicle suspension systems.

Conventional piston dampers typically comprise a cylinder containing a non-compressible fluid, such as oil, and a piston slideably mounted within the cylinder and attached to a distal end of a piston rod extending out of an end of the cylinder. The fluid within the cylinder passes through one or more orifices of the piston providing damping of relative motion between the piston/piston rod and the cylinder.

The cylinder and the piston rod are attached to separate structures to dampen relative motion of the two structures along the direction of piston travel. Piston dampers are used as shock absorbers on automobiles and on other vehicles. Piston dampers also are used to provide motion resistance on exercise equipment such as stair climbers and rowing machines.

A compressible gas is located inside the cylinder and is typically isolated from the fluid by a moveable wall defining a gas chamber to accommodate the displacement of fluid caused by the movement of the piston rod into and out of the cylinder. Typically a static pressure for the compressible gas in the gas chamber of between 20-30 bar is required to avoid cavitation during movement of the piston, particularly in compression of the damper. The high static pressure necessary for damper operation undesirably increases friction which decreases desired motion isolation and undesirably pre-loads the mounting system. Such known arrangement is typically referred to as a mono-tube damper.

In one known variation, an outer tube surrounds and is in fluid communication with the cylinder, the fluid passing through the outer cylinder rather than through apertures in the piston during movement of the piston. This allows the pressure in the gas chamber to be reduced to around 5 bar. A low static pressure considerably reduces friction and pre-load the mounting system. Such system is known as a twin-tube damper.

In known mono-tube damper arrangements, the damping force in compression and rebound is determined by the size and number of flow apertures in the piston. Often it is desirable to vary the damping force during operation of the vehicle to suit different driving conditions. To achieve such variable damping effect, it is known to provide dampers having a cylinder containing an MR fluid and having an MR piston slideably mounted within the cylinder. The MR fluid passes through an orifice of the MR piston. Exposing the MR fluid in the orifice to a varying magnetic field, generated by providing a varying electric current to an electric coil of the MR piston, varies the damping effect of the MR fluid in the orifice providing variably-controlled damping of relative motion between the MR piston and the cylinder. The electric current applied to the coil is varied to accommodate varying operating conditions.

A compressible gas is located inside a gas chamber In the cylinder defined by a moveable wall separating the gas from the MR fluid. A rod attached to the MR piston extends away from the moveable wall and outside the cylinder. The cylinder and the rod are attached to separate structures to dampen relative motion of the two structures along the direction of piston travel. Again, to avoid cavitation, the gas chamber must be pressurised to a high pressure to pre-charge the fluid within the cylinder. Furthermore, the requirement for electrical conductors from the coil to be passed through the piston rod frequently leads to problems due to the limited packaging space around the upper end of the piston rod.

US 6695102 discloses a MR twin-tube damper wherein the MR fluid valve is mounted within a lower region of the cylinder rather than in the piston, such MR valve controlling the flow of fluid between the inner and outer tubes during movement of the piston within the inner tube or cylinder. This enables the wiring to be simplified since electrical connections can be provided on the side of the cylinder where there is less space restriction.

The piston is solid with no fluid flow therethrough, damping force being provided by restriction of the flow of fluid through the MR valve, the flow through the MR valve being bidirectional. Therefore, when the damper is in compression, the pressure downstream of the MR valve, between the upper side of the piston and the MR valve, is reduced, leading to a risk of cavitation unless the gas pressure is increased to mono-tube pressures to pre-load the MR fluid.

What is needed is a magnetorheological damper which does not require the use of highly pressurised gas whilst at the same time providing easier electrical connection to the damper.

According to the present Invention there is provided a damping device comprising a cylinder containing a volume of magnetorheological fluid therein, said cylinder having a piston slidably mounted therein, said piston dividing said cylinder into a compression chamber and a rebound chamber, the piston being connected to a distal end of a piston rod, said piston rod extending out of the cylinder through the rebound chamber, an MR valve being provided in a flow path for controlling the flow of fluid from said rebound chamber to said compression chamber, at least one first one way valve being provided In said piston for allowing the flow of fluid through said piston from said compression chamber to said rebound chamber while preventing the flow of fluid through said piston from said rebound chamber to said compression chamber, at least one second one way valve being provided in said flow path for allowing the flow of fluid from said rebound chamber to said compression chamber through said MR valve while preventing the return flow of fluid from said compression chamber to said further chamber through said MR valve.

Preferably said at least one second one way valve is provided downstream of said MR valve.

Preferably a compressible gas is provided in a region of said flow path or in a reservoir communicating with said flow path downstream of said MR valve. Preferably said compressible gas is isolated from said MR fluid by means of a movable wall or diaphragm.

Preferably the static pressure of said compressible gas is between atmospheric and 10 bar, more preferably between atmospheric and 5 bar.

Preferably said MR valve divides said flow path into a first region upstream of said MR valve, said first region communicating with said rebound chamber, and a second region downstream of said MR valve communicating with said compression chamber.

In a preferred embodiment, at least a portion of said flow path is defined between an outer wall of the cylinder and an outer tube concentrically arranged around at least a portion of said outer wall.

The MR valve may be provided at or adjacent a side region of said outer wall. Alternatively, the MR valve is arranged coaxially with said cylinder.

Preferred embodiments of the present invention will now be described, with reference to the accompanying drawings, in which:-
Fig.1 is a schematic side view of a twin-tube MR damper according to a first embodiment of the present invention;
Fig. 2 is a schematic view of a twin-tube MR damper according to a second embodiment of the present invention; and
Fig. 3 is a schematic view of a twin-tube MR damper according to a third embodiment of the present invention.

In the following description the terms "upper", "lower", "above" and "below" are used with reference to the orientation of the damper as shown in each of the drawings. However, it should be understood that a damper in accordance with the present invention can be used in any desired orientation depending upon the application, and thus such terms should not be considered limiting.

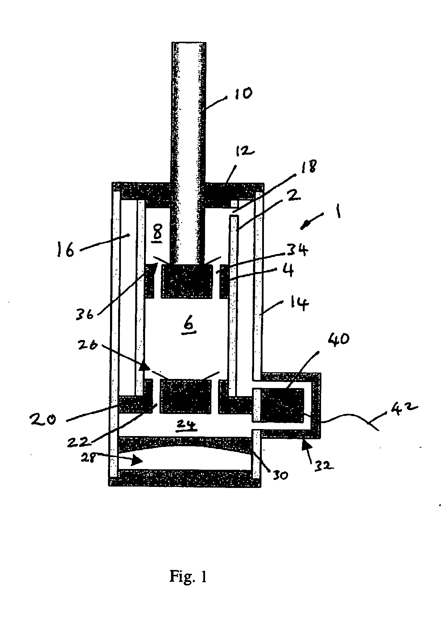

As illustrated in Fig 1, a twin-tube MR damper according to a first embodiment of the present invention comprises a damper body 1 having an inner tube 2 defining a cylinder within which is slideably mounted a piston 4, the piston 4 dividing the cylinder into a compression chamber 6 below the piston and a rebound chamber 8 above the piston 4. The piston 4 is connected to one end of a piston rod 10, the piston rod 10 extending through the rebound chamber 8 and out of the damper body 1 through an aperture in an end wall 12 of the damper body 1.

An outer tube 14 is arranged concentrically around the inner tube 2 to define an outer chamber 16 between the inner and outer tubes. At least one inlet passage 18 is provided in an upper wall of the inner tube 2 whereby the rebound chamber 8 is in fluid communication with the outer chamber 16.

A lower wall 20 of the compression chamber 6 is provided with a plurality of passageways 22 whereby the compression chamber 6 can be placed in fluid communication with a lower chamber 24. Each passageway 22 is provided with a lower one way valve 26 allowing MR fluid to flow through the passageway 22 from the lower chamber 24 to the compression chamber 6 while preventing the flow of fluid through the passageway 22 from the compression chamber 6 to the lower chamber 24.

A lower portion of the lower chamber 24 defines a gas chamber 28 containing a compressible- gas, preferably an inert gas such as nitrogen, the gas chamber 28 being separated from the remainder of the lower chamber 24 by means of a moveable wall 30. It is envisaged that the moveable wall may be omitted if not required, for example if the damper is to be mounted "upside down" with respect to the orientation shown in the drawings.

It is also envisaged that the displacement of fluid caused by movement of the piston rod into the cylinder may be accommodated by an accumulator, such as a metal bellows or spring loaded piston communicating with the lower chamber 24, instead of a compressible gas.

Fluid communication between the outer chamber 16 and the lower chamber 24 is provided by means of an MR valve 32 mounted on a side of the damper body 1. The MR valve 32 includes an electromagnetic coil 40 for applying a magnetic field to MR fluid passing though one or more passageways through the MR valve as is conventional in the art. Electrical connections 42 are provided for supplying current to the coil 40 of the MR valve to control the flow of fluid therethrough.

Thus the compression and rebound chambers, outer chamber and the region of the lower chamber above the moveable wall together define a closed fluid circuit which is filled with MR fluid.

The piston 4 is provided with a plurality of axial through passageways 34, each passageway 34 being provided with an upper one way valve 36 whereby MR fluid can flow through the passageways 34 from the compression chamber 6 to the rebound chamber 8 but is prevented from flowing through the passageways 34 from the rebound chamber 8 to the compression chamber 6.

Thus, in use, flow through the MR valve is uni-directional by virtue of the one way valves 26,36 which only permit flow of fluid from the compression chamber 6 into rebound chamber 8 and from the lower chamber 24 into the compression chamber 6 such that fluid can only flow through the MR valve 32 from the outer chamber 16 to the lower chamber 24 in one direction.

When the damper moves towards compression, the lower one-way valves 26 close, preventing MR fluid from flowing through the passageways 22, while the upper one-way valves 36 on the piston 4 open whereby MR fluid flows through the passageways 34 from the compression chamber 6 into the rebound chamber 8. The volume of fluid displaced due to the movement of the piston rod 10 into the rebound chamber 8 flows into the outer chamber 16 through the inlet passage 18 and from there through the MR valve into the lower chamber 24 wherein the moveable wall 30 can move against the compressible gas in the gas chamber 28.

When the damper moves towards rebound, the upper one-way valve 36 closes and MR fluid is pushed by the piston through the inlet passage 18 and into the outer chamber 16. As in compression, the fluid then passes through the MR valve and into the lower chamber 24 before passing into the compression chamber 6 through the passageways 22.

Thus, the compression damping and the rebound damping are independently determined and controlled by the MR valve. Thus asymmetric compression/rebound damping control is achieved.

Because the flow through the MR valve is unidirectional the gas pressure in the gas chamber 28 can be low, reducing the static loading on the seals and bushings of the damper leading to reduced damper friction, improving ride comfort at low damping force conditions (i.e. low MR valve coil current). The unidirectional flow also reduces the risk of cavitation at high piston velocity in compression. Furthermore, the circulation of the MR fluid through the damper by virtue of the one way valves improves thermal dissipation and hence reduces deterioration of the MR fluid, increasing the life of the fluid.

The side location of the MR valve facilitates the provision of electrical connections to the coil of the MR valve and reduces the overall length of the damper.

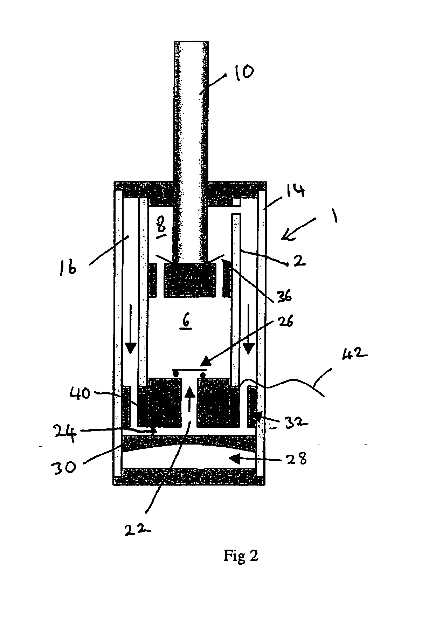

A damper according to a second embodiment of the present invention is illustrated in Fig. 2. Rather than being provided on one side of the damper body 1, as in the first embodiment, in the second embodiment the MR valve 32 is provided below the rebound chamber coaxial with the piston rod 10. Such arrangement provides more efficient (i.e. straighter) flow paths for the MR fluid through the MR valve 32 at the expense of overall damper length (increased "dead length").

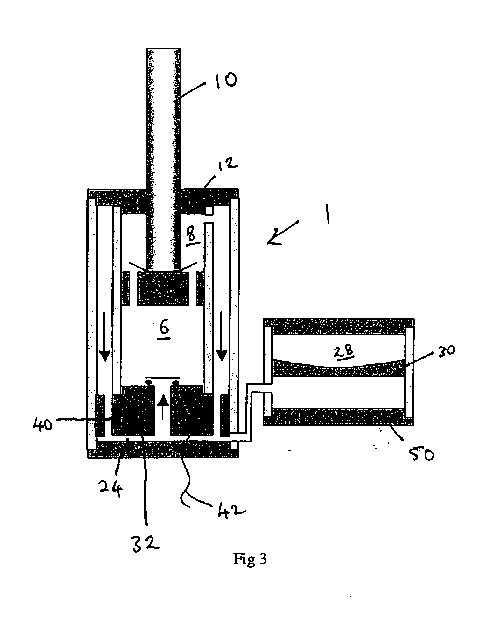

Fig 3 shows a further adaptation of the damper arrangement of Fig 2,
wherein the gas chamber 28 is provided in a remote reservoir 50 communicating with a lower chamber 24 of smaller volume. Such arrangement reduces the overall length of the damper, in particular the "dead length", and further facilitates electrical connection of the coil of the MR valve.

In known mono-tube MR dampers it is common to provide a bypass passage in the piston outside of the magnetic field of the MR valve to provide a tuned constant damping force independent of the MR valve. In the preferred embodiments of the present invention, such bypass flow can be provided by allowing a predetermined return flow effectively bypassing each of the one way valves. In compression, the bypass flow can be provided by a passage or leak path allowing a predetermined flow from the compression chamber 6 into the lower chamber 24, thus bypassing the lower one-way valve 26. In rebound, the bypass flow can be provided by a passage or leak path in the piston 4 allowing a predetermined flow from the rebound rebound chamber 8 into the compression chamber 6, effectively bypassing the upper one-way valve 36.

## Claims

1. A damping device comprising a cylinder containing a volume of magnetorheological fluid therein, said cylinder having a piston slidably mounted therein, said piston dividing said cylinder into a compression chamber and a rebound chamber, the piston being connected to a distal end of a piston rod, said piston rod extending out of the cylinder through the rebound chamber, an MR valve being provided in a flow path for controlling the flow of fluid from said rebound chamber to said compression chamber, at least one first one way valve being provided in said piston for allowing the flow of fluid through said piston from said compression chamber to said rebound chamber while preventing the flow of fluid through said piston from said rebound chamber to said compression chamber, at least one second one way valve being provided in said flow path for allowing the flow of fluid from said rebound chamber to said compression chamber through said MR valve while preventing the return flow of fluid from said compression chamber to said rebound chamber through said MR valve.

2. A damping device as claimed in claim 1, wherein said at least one second one way valve is provided downstream of said MR valve.

3. A damping device as claimed In any preceding claim, wherein a compressible gas or an accumulator is provided in a region of said flow path or in a reservoir communicating with said flow path downstream of said MR valve to accommodate the displacement of fluid caused by the movement of the piston rod into the cylinder.

4. A damping device as claimed in claim 3, wherein said compressible gas is isolated from said MR fluid by means of a movable wall or diaphragm.

5. A damping device as claimed in claim 3 or 4, wherein the static pressure of said compressible gas is between atmospheric and 10 bar.

6. A damping device as claimed in claim 3 or 4, wherein the static pressure of said compressible gas is between atmospheric and 5 bar.

7. A damping device as claimed in any preceding claim, wherein said MR valve divides said flow path into a first region upstream of said MR valve, said first region communicating with said rebound chamber, and a second region downstream of said MR valve, said second region communicating with said compression chamber.

8. A damping device as claimed in any preceding claim, wherein at least a portion of said flow path is defined between an outer wall of the cylinder and an outer tube concentrically arranged around at least a portion of said outer wall.

9. A damping device as claimed in claim 8, wherein said MR valve is provided at or adjacent a side region of said outer wall.

10. A damping device as claimed in claim 8, wherein said MR valve is arranged coaxially with said cylinder.
